# EUROPEAN PATENT SPECIFICATION

(11) **EP 2 349 519 B1**
(45) Date of publication and mention of the grant of the patent: **05.09.2018**
(21) Application number: 09828212.2
(22) Date of filing: 19.11.2009
(51) Int. Cl.: B01D 11/00

(54) **COMPOSITIONS AND METHODS FOR DISSOLVING OILS**
ZUSAMMENSETZUNGEN UND VERFAHREN ZUR AUFLÖSUNG VON ÖLEN
COMPOSITIONS ET PROCÉDÉS DE DISSOLUTION D'HUILES

(30) Priority: 19.11.2008 US 116011 P; 09.01.2009 US 351807; 18.11.2009 US 621336
(43) Date of publication of application: 03.08.2011
(73) Proprietor: Honeywell International Inc., Morris Plains, NJ 07950 (US)
(72) Inventor: HULSE, Ryan, Getzville NY 14068 (US); SINGH, Rajiv, R., Getzville NY 14068 (US); PAONESSA, Martin, R., Niagra Falls NY 14304 (US); COOK, Kane, Eggertsville NY 14226 (US); KNOPECK, Gary M., Lakeview NY 14085 (US)
(74) Representative: Crooks, Elizabeth Caroline
(86) International application number: PCT/US2009/065122
(87) International publication number: WO 2010/059809

(56) References cited:
- US-A- 5 539 133
- US-A1- 2002 182 722
- US-A1- 2002 182 722
- US-A1- 2007 007 488
- US-A1- 2007 007 488

## Description

### BACKGROUND

### 1. Field of Invention:

This invention relates generally to solvent compositions and methods for dissolving oils, including the extraction of oils from biomass.

### 2. Description of Related Art

Oil can be extracted from biomass using several known methods. Physical extraction, for example, uses mechanical force to separate oil from the biomass. Expeller-pressed, screw press, and ram press are common types of physical extraction methods. The amount of oil extracted using such physical methods varies widely, depending upon the plant material and the mechanical process used. In general, mechanical extraction is less efficient than chemical based extraction, such as solvent extraction.

In typical solvent extraction, an organic solvent is used to extract the oils from the biomass, such as plant matter. Closed-loop systems typically include an extraction vessel containing biomass and through which a liquid extraction solvent flows, an evaporator for separating the low boiling solvent from the extracted oil, and a compressor for converting the solvent back to liquid. However, the capital and operating costs of such systems are often high due to the necessary size of equipment required to achieve a high yield. For example, faster flow solvent flow rates typically yield better mass transfer from the biomass to the solvent, but result in the need for a very large, and thus costly, compressor. However, the efficiency of an extraction process can be greatly increased by increasing the solubility of the target oil in the solvent.

A common volatile organic solvent employed for extracting plant oil is hexane. Yet the commercial use of hexane, and similar previously used solvents, is dangerous because these solvents are flammable. Preferred extraction solvents are nonflammable. As used herein, the term "nonflammable" refers to compounds or compositions which do not exhibit a flashpoint as measured by one of the standard flash point methods, for example ASTM-1310-86 "Flash point of liquids by tag Open-cup apparatus".

In addition, hexane and like solvents are relatively expensive to remove from the extracted oil in an environmentally friendly and energy efficient way. This often requires distillation of the oil/hexane mixture, which is energy intensive, and even the most efficient distillation process can permit some hexane vapor to escape into the atmosphere, which is problematic in regions where such emissions must be limited for environmental reasons. Preferably, an extraction solvent has a low boiling point relative to the oil being extracted.

In many applications it is also highly desirable for solvent compositions to be relatively stable, that is, to be relatively resistant to possible chemical changes during storage and use.

Chlorofluorocarbons ("CFCs") and hydrochlorofluorocarbons ("HCFCs") have been proposed as solvents for extracting oils from plants to obtain fragrances, flavorants and medicaments. Due to the ozone deletion potential ("ODP") of CFCs and HCFCs, however, these chemicals are being phased out of commercial use in many applications. In an attempt to find a suitable replacement for CFCs and HCFCs, hydrofluorocarbons ("HFCs") were developed. But then concerns arose about the global warming potential ("GWP") of certain HFCs, particularly those having long atmospheric lifetimes.

Accordingly, for these various reasons, the industries involved in plant oil extraction are looking for environmentally friendly, easy-to-use alternatives to volatile organic solvents and known CFCs, HCFCs, and the like. US20020182722 discloses a method for extracting plant oil from bio mass using hydrofluorocarbons as solvents.

### SUMMARY OF THE INVENTION

Applicants have come to recognize that 1-chloro-3,3,3-trifluoropropene (1233zd) is useful as a solvent for extracting oils from biomass, particularly compared to other fluoroolefins having a low or negligible ozone depletion potential (ODP) and low or negligible global warming potential (GWP).

Applicants have further come to recognize, that while several hydrochlorofluoro olefins (HCFOs) have might have applicability for use as solvents from a strict solvent power stand-point, some HCFOs nevertheless have limited applicability for such purposes for toxicity and/or other reasons. Furthermore, applicants have come to appreciate that certain HCFOs have difficulty dissolving high molecular weight oils and oil fractions.

The present invention in preferred embodiments, therefore, provides methods for extracting a plant oil from plant matter comprising providing plant matter and contacting the plant matter in a solvent comprising 1-chloro-3,3,3-trifluoropropene in an amount sufficient to dissolve at least a portion of the plant oil, and separating the solvent/oil solution from the plant matter.

Preferably the 1-chloro-3,3,3-trifluoropropene is substantially either in the cis- or *trans* isomeric form, although combinations of both forms may be used together.

1-Chloro-3,3,3-trifluoropropene is relatively non-toxic, has low global warming potential and low ozone deletion potential. In addition, unlike many HCFOs, 1-chloro-3,3,3-trifluoropropene can dissolve high molecular weight oils and oil fractions. This allows it to be used for a variety of plant oil extraction applications where oil should be dissolved and extracted.

### BRIEF DESCRIPTION OF THE DRAWING

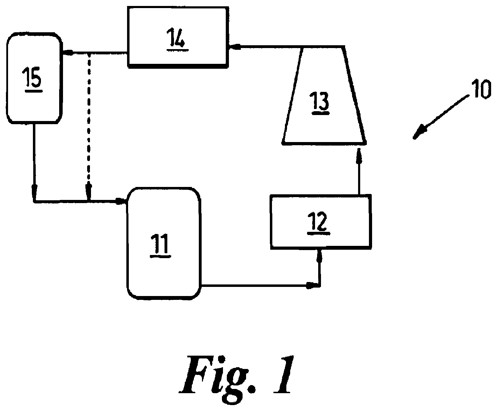

Figure 1 is a schematic diagram of an extraction system and method according to an embodiment of the invention.

### DETAILED DESCRIPTION OF PREFERRED EMBODIMENTS

### A. Definitions

As used herein, the term "biomass" means biological material derived from living or recently living plants (including whole plants, or portions thereof such as seeds, fruits, flowers, leaves, stalks, buds and woody parts) and/or algae. Biomass includes, but is not limited to, lignin, plant parts, fruits, vegetables, plant processing waste, wood chips, chaff, grain, grasses, corn, corn husks, weeds, aquatic plants, hay, paper, paper products, recycled paper and paper products, and any cellulose containing biological material or material of biological origin.

As used herein, the term "oil" refers to lipids such as fatty acids and glycerides, C4 - C24 aliphatic molecules, paraffins, waxes, essential oil, and the like, as well as mixtures of combinations of these.

As used herein, "plant oil" means oil derived from biomass. Examples of plant oil include, but are note limited to, canola oil, corn oil, soy oils, rapeseed oil, soybean oil, colza oil, tall oil, sunflower oil, hempseed oil, olive oil, linseed oil, coconut oil, castor oil, peanut oil, palm oil, mustard oil, cottonseed oil, algal oil, cuphea oil, camelina oil, jatropha oil, crambe oil, curcas oil, babassu oil, palm kernel oil, and the like. Typically, glycerides, free fatty acids (FFAs), and/or fatty acid alkyl esters of plant oils contain aliphatic hydrocarbon chains in their structure which have about 8 to about 24 carbon atoms with a majority of the fats and oils containing high concentrations of fatty acids with 16 and 18 carbon atoms. Some plant oils, such as algal oil, contain high amounts of triglycerides.

Types of plant oils include algal, vegetable, essential, and edible oils. "Vegetable oil" means drying, semidrying, non-drying and inedible soap stocks. Examples of the vegetable drying oils include linseed, tung and oiticica oils. Examples of vegetable semidrying oils are soybean and cotton seed. Examples of vegetable non-drying oils are castor and coconut oils. Some of these non-drying oils are used for biofuels.

"Essential oil" includes the volatile liquids derived from the fruit, flowers, stems and leaves and often the entire plant, which contain terpenes and are used chiefly for perfumery and flavorings. Examples of essential oils include rose, jasmone, sweet orange, *mentha arvensis,* peppermint, cedarwood, lemon, *eucapyptus globulus, litsea cubeba,* clove, tea tree and spearmint.

"Edible oil" means an oil derived from fruits or seeds and are chiefly used in foodstuffs, but also as biofuels. Examples of edible oils are corn, coconut, soybean, olive, cottonseed and safflower.

"Algal oil" means any oil derived from algae. Types of algae include red algae, brown algae, green algae, and diatoms. Algae also includes both wild algae and cultivars, the latter including enhanced algae strains, microalgae, genetically modified algae, etc. The algae oil can be obtained from algae grown in the wild, in a fresh- or salt-water farm or field, and/or heterotrophically. In certain preferred embodiments, the algae is at least one strain that is capable of producing, and that is grown under conditions to produce, a relatively high amount of oil. Preferably the algae is a high lipid content strain, i.e., a strain having a lipid content of greater than about 14%, more preferably from about 15 to about 90%, and even more preferably from about 35 to about 90% by dry weight of algae. For example, *Botryococcus braunii* produces long chain hydrocarbons representing 86% of its dry weight; *Neochloris oleoabundans* has lipid content of 35 - 54% dry weight; and *Euglena gracilis* has a lipid content of 14-20% by dry weight. Other examples of algae useful in the present invention include, but are not limited to, *Scenedesmus dimorphus, Nannochloropsis salina, Dunaliella tertiolecta, Tetraselmis chui, Isochrysis galbana, Phaeodactylum tricorntum, Pleurochrysis carterae, Prymnesium parvum, Tetraselmis suecica,* and *Spirulina* species.

### B. Methods for making 1-chloro-3,3,3-trifluoropropene

United States Patent No. 6,844,475 discloses a process for making this substance. The end product is approximately 90% by weight of the *trans* isomer and 10% by weight *cis.* In preferred embodiments, the solvent composition comprises 1-chloro-3,3,3-trifluoropropene wherein the trans:cis ration is greater than 9:1. For example, in certain embodiments, it is preferred to substantially separate at least a portion of the *cis-* from *trans-,* in the product produced by the method of the 6,844,475 patent so that the resultant preferred form of 1-chloro-3,3,3-trifluoropropene to be used in the solvent compositions and/or methods is more enriched in the *trans* isomer. Because the *cis* isomer has a boiling point of about 40°C in contrast with the *trans* isomer boiling point of about 20°C, the two can be separated by any number of distillation methods known in the art. One preferred separation method comprises batch distillation in which the mixture if *cis* and *trans*-1-chloro-3,3,3-trifluoropropene is charged to a reboiler. The *trans* isomer is removed in the overhead leaving the *cis* isomer in the reboiler. The distillation can also be run in a continuous distillation where the *trans* isomer is removed in the overhead and the *cis* isomer is removed in the bottom. This distillation process can yield about 99.9% by weight or greater of *trans*-1-chloro-3,3,3-trifluoropropene and about 99.9% or greater of *cis*-1-chloro-3,3,3-trifluoropropene.

### C. Plant oil extraction methods

Known extraction processes using this solvent are normally carried out in closed-loop extraction equipment. A typical example 10 of such a system is shown schematically in FIG. 1. In this typical system 10, liquefied 1233zd solvent is allowed to percolate by gravity through a bed of high-lipid content algae biomass held in extraction vessel 11. From the extraction vessel it flows to evaporator 12 where the volatile solvent vapor is vaporized by heat exchange with a hot fluid and the preferred components are collected. The vapor from evaporator 12 is then compressed by compressor 13. The compressed vapor is next fed to a condenser 14 where it is liquefied by heat exchange with a cold fluid. The liquefied solvent is then optionally collected in intermediate storage vessel 15 or returned directly to the extraction vessel 11 to complete the circuit.

In one embodiment of this invention, 1-chloro-3,3,3-trifluoropropene is contacted, preferably intimately as by mixing with plant matter to dissolve at least a portion of the oil contained therein. Then a mixture or solution of such oil and 1-chloro-3,3,3-trifluoropropene is separated from the remaining plant matter to extract oil from the plant matter. This separation step can be performed by filtration (e.g., with a filter press or similar device) or centrifugation, or like known techniques. 1-Chloro-3,3,3-trifluoropropene can then be separated from the oil in the mixture after the mixture is separated from the plant matter. This second separation step yields oil from the plant and re-usable solvent.

For example, 1-chloro-3,3,3-trifluoropropene can be used in processes to extract essential oils from plant matter for later use in fragrances and flavorings. Specifically, the plant matter can be those materials from which the essential oils described above are obtained.

In another extraction method according to this invention, edible or vegetable oil can be extracted from fruit or plant seeds using this invention in the same manner described above for extracting essential oils. Some of these extracted oils that are later separated from the 1-chloro-3,3,3-trifluoropropene can be used as biofuels or for cooking oil purposes.

The method of this invention can be practiced in combination with other vegetable oil extraction methods. For example, plant matter (e.g., seeds) can be mechanically pressed to extract a portion of the oil. The resultant "cake" from oil press can then be subjected to solvent extraction according to this invention to extract the remaining oil from the cake. Oil is collected from this solvent extraction step by vaporizing 1-chloro-3,3,3-trifluoropropene out which is later recycled. In configuring the solvent extraction plant, pre-pressing may be involved in which case seeds can be lightly pressed leaving about 14% to 18% oil in pressed cake, depending upon the seed. Solvent extraction with this invention will further process the cake and can leave a smaller percentage of oil in the final cake or meal.

Oil-bearing plant matter can be ground or steam cooked prior to the matter being subjected to the extraction method of this invention.

Preferably the method of this invention employs 1-chloro-3,3,3-trifluoropropene substantially in the *trans*-1-chloro-3,3,3-trifluoropropene form as it has a lower boiling point than the *cis* isomer. This can allow for a less energy intensive separation of the solvent from the oil. However, the method of this invention can employ 1-chloro-3,3,3-trifluoropropene substantially in the *cis* isomeric form or as a mixture of *cis-* and *trans*-1-chloro-3,3,3- trifluoropropene.

Preferably, the method of this invention uses substantially pure 1-chloro-3,3,3-trifluoropropene as the extraction solvent. However, it can also use 1-chloro-3,3,3-trifluoropropene with other co-solvents. Suitable co-solvents can include HFCs such as 245fa and 365mfc which will aid in the ease of removal of the solvent from the oil and in the application of the solvent. Other co-solvents include hydrofluoroethers such as 7100, and alcohols such as methanol and ethanol which can increase the solvency toward a particular plant oil.

The amount of solvent necessary to achieve an efficient extraction is dependent upon the process used and can be determined by one skilled in the art without undue experimentation. For example, in a preferred embodiment, a solvent comprising 1233zd is circulated through a biomass in a closed loop system at a rate equivalent to about 0.1 to about 50 weight parts solvent per weight part biomass per hour. In another embodiment, biomass is immersed in a solvent bath for about 0.1 to about 10 hours.

In certain preferred embodiments, the 1233zd solvent is a liquid when it is in contact with the biomass. In other preferred embodiments, the 1233zd is a vapor during at least a portion, and preferably the full duration of its contact with the biomass.

In another aspect of the invention, the 1-chloro-3,3,3-trifluoropropene is used as a solvent to extract a plant oil from a biomass having a high moisture content, such as wet algae having a moisture content of at least about 25 weight percent water based upon the total weight of the biomass. Applicants have unexpectedly found that 1-chloro-3,3,3-trifluoropropene can effectively separate water from the desired oil.

### EXAMPLES

The following examples illustrate specific uses of the method of this invention and are not intended to limit it.

### Example 1:

2 grams of *trans*-HFCO-1233zd was added to a sealed vial that was fitted with a rubber septa. Jasmone was added drop wise to the vial at room temperature. The jasmone immediately dissolved into the *trans*-HFCO-1233zd. Up to 2 grams of jasmone was added to the vial so that the final concentration was 50:50 wt jasmone: *trans*-HCFO-1233zd, and there was only a single phase. This example illustrates the ability of *trans-*HFCO-1233zd to be used as a solvent for essential oils used in flavor and fragrances.

### Example 2:

This example demonstrates that essential oils and/or vegetable oils can be extracted using *trans*-HCFO-1233zd. *trans*-HCFO-1233zd (52 gr.) was combined with coconut meat (15 gr.). The mixture was then stirred at room temperature for 4 hours. The liquid was then removed from the mixture and transferred into a 100 ml graduated cylinder. The *trans*-HFCO-1233zd was allowed to evaporate by placing the graduated cylinder in a bath a 30°C. Once all of the *trans*- HFCO-1233zd had been removed, 2.36 gm of coconut oil remained.

### Examples 3 - 5 and Comparative Examples A - C:

These examples demonstrate the effectiveness of *trans*-HFCO-1233zd compared to 1,1,1,3-tetrafluoropropene (HFO-1234ze) as a solvent for plant oils.

Here, nine fischer porter tubes were cleaned and weighed. Approximately 10 grams of the indicated solid biomass was added to the respective tube and the total weight was recorded. Approximately 50 gm (40 mL) of the indicated liquid solvent was added to each tube. Again, the total weight was recorded. The tubes were shaken for about 20 minutes and then were allowed to sit overnight. The resulting liquid layer was separated from the remaining solid biomass. The solvent was evaporated and the remaining oil was weighed. The results are provided in Table A.

The test results demonstrate that *trans-HFCO-1233zd* has significantly better solvating power of plant oils compared to HFO-1234ze. The *trans*-HFCO-1233zd demonstrated some improvement in solvating oil from low-lipid content algae oil. However, as demonstrated in prophetic Example 6, it is expected that *trans*-HFCO-1233zd can extract at least 50 percent more oil from high-lipid content algae compared to HFO-1234ze.

### Example 6:

The test procedure of example 6 and comparative example C is repeated except that a high-lipid content algae is used. The results will show that *trans*-HFCO-1233zd extracts at least 50 percent more oil from high-lipid content algae compared to HFO-1234ze.

### Example 7:

About 2 grams of *trans*-HCFO-1233zd is added to a sealed vial that contains shredded microalgae, with high oil content. After agitation, the algae oil dissolves in *trans-HFCO-1233zd.* The liquid phase is separated and distilled to obtain substantially pure algae oil and regain *trans-HFCO-1233zd.*

### Example 8:

A sample of *trans*-HCFO-1233zd was added to vial fitted with a septa. Water was then injected into the vial until 2-phases were seen. A sample of the lower phase which is rich in trans-HCFO-1233zd was sampled into a gas tight syringe. The moisture in the lower phase was than analyzed using a Karl-Fischer titrator. The moisture level was determined to be 460 ppm by weight at 25°C. This example illustrates the ability of *trans*-HCFO-1233zd to effectively remove water from a material which dissolves in *trans-HCFO-1233zd.*

**TABLE A**

| **Example** | **Biomass** | **Solvent** | **Weight Biomass** | **Weight Solvent** | **Bottle Weight** | **Oil Weight after 1 day drying** | **% oil Extracted** | **Oil Weight after 4 days drying** | **% oil Extracted** |
|---|---|---|---|---|---|---|---|---|---|
| 3 | peanuts | *trans-*1233zdC | 10.14 | 50.68 | 24.372 | 1.772 | 17.48% | 1.755 | 17.31% |
| A | peanuts | 1234ze(E) | 10.46 | 49.86 | 24.372 | 0 | 0.00% | -0.014 | -0.13% |
| 4 | sunflower | *trans-*1233zd | 10.1 | 50.51 | 24.303 | 1.08 | 10.69% | 1.079 | 10.68% |
| B | sunflower | 1234ze(E) | 9.47 | 51.81 | 24.489 | 0.001 | 0.01% | 0 | 0.00% |
| 5 | algae (low lipid content) | *trans-*1233zd | 10.86 | 51.18 | 24.445 | 0.019 | 0.17% | 0.026 | 0.24% |
| C | algae (low lipid content) | 1234ze(E) | 13.72 | 49.67 | 24.298 | 0.024 | 0.17% | 0.03 | 0.22% |

## Claims

1. A method for extracting plant oil from biomass comprising:
contacting a solvent comprising 1-chloro-3,3,3-trifluoropropene with a biomass comprising plant oil to produce an extractant composition comprising said solvent and at least a portion of said plant oil and a residual biomass;
separating said extractant composition from said residual biomass; and
evaporating or condensing one of said solvent or said extractant from said extractant composition to produce product composition rich in said plant oil and a recycle composition rich in said solvent.

2. The method of claim 1 wherein said solvent is a liquid during at least a portion of said contacting step.

3. The method of claim 2 wherein said evaporating or condensing step comprises evaporating said solvent from said extractant composition to form a liquid product composition and a vapor recycle composition.

4. The method of claim 1 wherein said solvent is a vapor during at least a portion of said contacting step.

5. The method of claim 1 wherein said solvent of said contacting step comprises at least a portion of said recycle composition.

6. The method of claim 1 wherein said solvent comprises at least 50 weight percent of said 1-chloro-3,3,3-trifluoropropene.

7. The method of claim 1 wherein said solvent consists essentially of said 1-chloro-3,3,3-trifluoropropene.

8. The method of claim 1 wherein said biomass is solid.

9. The method of claim 1 wherein said biomass is dry or semi-dry algae having a lipid content of about 14 to about 90 percent by dry weight.

10. The method of claim 1 wherein said 1-chloro-3,3,3-trifluoropropene comprises a mixture of *cis-* and *trans*-1-chloro-3,3,3-trifluoropropene.

11. The method of claim 1 wherein said 1-chloro-3,3,3-trifluoropropene consists essentially of *cis-* and *trans*-1-chloro-3,3,3-trifluoropropene.

12. The method of claim 1 wherein said biomass is wet algae having a moisture content of at least about 25 weight percent based upon the total weight of the biomass.

13. The method of claim 1 wherein said biomass is wet algae having a moisture content of at least about 50 weight percent based upon the total weight of the biomass.

14. A system for extracting plant oil from biomass comprising:
a biomass comprising plant oil disposed in an extraction vessel;
a liquid solvent feed stream comprising 1-chloro-3,3,3-trifluoropropene, wherein said solvent feed stream is in fluid communication with said extraction vessel;
a liquid extractant exit stream comprising plant oil derived from said biomass and 1-chloro-3,3,3-trifluoropropene.

15. The system of claim 14 further comprising an evaporator in fluid communication with said exit stream, a vapor recycle solvent stream in fluid communication with said evaporator, a condenser in fluid communication with said vapor recycle stream and in fluid communication with said liquid solvent feed stream.

16. The system of claim 14 wherein said biomass comprises dry or semi-dry algae having a lipid content of about 14 to about 90 percent by dry weight.

## Patentansprüche

1. Verfahren zum Extrahieren von Pflanzenöl aus Biomasse, umfassend:
Inkontaktbringen eines 1-Chlor-3,3,3-trifluorpropen umfassenden Lösungsmittels mit einer Pflanzenöl enthaltenden Biomasse, so dass eine Extrahierzusammensetzung erzeugt wird, die das Lösungsmittel und wenigstens einen Teil des Pflanzenöls und einen Biomasserest umfasst;
Trennen der Extrahierzusammensetzung vom Biomasserest; und
Abziehen oder Kondensieren entweder des Lösungsmittels oder des Extraktionsmittels aus der Extrahierzusammensetzung, so dass eine Produktzusammensetzung, die mit dem Pflanzenöl angereichert ist, und eine Rückführzusammensetzung, die mit dem Lösungsmittel angereichert ist, erzeugt werden.

2. Verfahren nach Anspruch 1, wobei es sich bei dem Lösungsmittel wenigstens während eines Teils des Kontaktierungsschritts um eine Flüssigkeit handelt.

3. Verfahren nach Anspruch 2, wobei der Abzieh- oder Kondensierschritt Abziehen des Lösungsmittels aus der Extrahierzusammensetzung unter Bildung einer flüssigen Produktzusammensetzung und einer dampfförmigen Rückführzusammensetzung umfasst.

4. Verfahren nach Anspruch 1, wobei das Lösungsmittel wenigstens während eines Teils des Kontaktierungsschritts in Dampfform vorliegt.

5. Verfahren nach Anspruch 1, wobei das Lösungsmittel des Kontaktierungsschritts wenigstens einen Teil der Rückführzusammensetzung umfasst.

6. Verfahren nach Anspruch 1, wobei das Lösungsmittel wenigstens 50 Gewichtsprozent des 1-Chlor-3,3,3-trifluorpropens umfasst.

7. Verfahren nach Anspruch 1, wobei das Lösungsmittel im Wesentlichen aus dem 1-Chlor-3,3,3-trifluorpropen besteht.

8. Verfahren nach Anspruch 1, wobei die Biomasse in fester Form vorliegt.

9. Verfahren nach Anspruch 1, wobei es sich bei der Biomasse um trockene oder halbtrockene Algen mit einem Fettgehalt von etwa 14 bis etwa 90 Prozent Trockengewicht handelt.

10. Verfahren nach Anspruch 1, wobei das 1-Chlor-3,3,3-trifluorpropen ein Gemisch von *cis-* und *trans*-1-Chlor-3,3,3-trifluorpropen umfasst.

11. Verfahren nach Anspruch 1, wobei das 1-Chlor-3,3,3-trifluorpropen im Wesentlichen aus *cis-* und *trans-*1-Chlor-3,3,3-trifluorpropen besteht.

12. Verfahren nach Anspruch 1, wobei es sich bei der Biomasse um feuchte Algen mit einem Feuchtigkeitsgehalt von wenigstens etwa 25 Gewichtsprozent bezogen auf das Gesamtgewicht der Biomasse handelt.

13. Verfahren nach Anspruch 1, wobei es sich bei der Biomasse um feuchte Algen mit einem Feuchtigkeitsgehalt von wenigstens etwa 50 Gewichtsprozent bezogen auf das Gesamtgewicht der Biomasse handelt.

14. System zum Extrahieren von Pflanzenöl aus Biomasse, umfassend:
eine Pflanzenöl enthaltende Biomasse, die in einem Extraktionsgefäß vorgelegt ist;
ein Zustrom von flüssigem Lösungsmittel, der 1-Chlor-3,3,3-trifluorpropen umfasst, wobei der Lösungsmittelzustrom in fluidischer Verbindung mit dem Extraktionsgefäß steht;
ein Abgangsstrom von flüssigem Extraktionsmittel, der aus der Biomasse gewonnenes Pflanzenöl und 1-Chlor-3,3,3-trifluorpropen umfasst.

15. System nach Anspruch 14, ferner umfassend einen Verdampfer in fluidischer Verbindung mit dem Abgangsstrom, einen Dampfrückführlösungsmittelstrom in fluidischer Verbindung mit dem Verdampfer, einen Kondensator in fluidischer Verbindung mit dem Dampfrückführstrom und in fluidischer Verbindung mit dem Zustrom von flüssigem Lösungsmittel.

16. System nach Anspruch 14, wobei die Biomasse trockene oder halbtrockene Algen mit einem Fettgehalt von etwa 14 bis etwa 90 Prozent Trockengewicht umfasst.

## Revendications

1. Méthode d'extraction d'une huile végétale à partir de biomasse, comprenant :
la mise en contact d'un solvant comprenant du 1-chloro-3,3,3-trifluoropropène avec une biomasse comprenant une huile végétale, afin de produire une composition d'agent d'extraction comprenant ledit solvant et au moins une portion de ladite huile végétale et une biomasse résiduelle ;
la séparation de ladite composition d'agent d'extraction à partir de ladite biomasse résiduelle ; et
l'évaporation ou la condensation de l'un parmi ledit solvant ou ledit agent d'extraction à partir de ladite composition d'agent d'extraction afin de produire une composition de produit riche en ladite huile végétale et une composition de recyclage riche en ledit solvant.

2. Méthode selon la revendication 1, dans laquelle ledit solvant est un liquide pendant au moins une portion de ladite étape de mise en contact.

3. Méthode selon la revendication 2, dans laquelle ladite étape d'évaporation ou de condensation comprend l'évaporation dudit solvant à partir de ladite composition d'agent d'extraction afin de former une composition de produit liquide et une composition de recyclage de vapeur.

4. Méthode selon la revendication 1, dans laquelle ledit solvant est une vapeur pendant au moins une portion de ladite étape de mise en contact.

5. Méthode selon la revendication 1, dans laquelle ledit solvant de ladite étape de mise en contact comprend au moins une portion de ladite composition de recyclage.

6. Méthode selon la revendication 1, dans laquelle ledit solvant comprend au moins 50% en poids dudit 1-chloro-3,3,3-trifluoropropène.

7. Méthode selon la revendication 1, dans laquelle ledit solvant est constitué essentiellement dudit 1-chloro-3,3,3-trifluoropropène.

8. Méthode selon la revendication 1, dans laquelle ladite biomasse est solide.

9. Méthode selon la revendication 1, dans laquelle ladite biomasse est constituée d'algues sèches ou demi-sèches ayant une teneur en lipides allant d'environ 14 à environ 90% en poids sec.

10. Méthode selon la revendication 1, dans laquelle ledit 1-chloro-3,3,3-trifluoropropène comprend un mélange de *cis-* et *trans*-1-chloro-3,3,3-trifluoropropène.

11. Méthode selon la revendication 1, dans laquelle ledit 1-chloro-3,3,3-trifluoropropène est constitué essentiellement de *cis-* et *trans*-1-chloro-3,3,3-trifluoropropène.

12. Méthode selon la revendication 1, dans laquelle ladite biomasse est constituée d'algues humides ayant une teneur en humidité d'au moins environ 25% en poids, sur la base du poids total de la biomasse.

13. Méthode selon la revendication 1, dans laquelle ladite biomasse est constituée d'algues humides ayant une teneur en humidité d'au moins environ 50% en poids, sur la base du poids total de la biomasse.

14. Système d'extraction d'huile végétale à partir de biomasse, comprenant
une biomasse comprenant de l'huile végétale disposée dans un récipient d'extraction ;
un courant d'alimentation de solvant liquide comprenant du 1-chloro-3,3,3-trifluoropropène, où ledit courant d'alimentation de solvant est en communication fluide avec ledit récipient d'extraction ;
un courant de sortie d'agent d'extraction liquide, comprenant de l'huile végétale dérivée de ladite biomasse et du 1-chloro-3,3,3-trifluoropropène.

15. Système selon la revendication 14, comprenant en outre un évaporateur en communication fluide avec ledit courant de sortie, un courant de solvant de recyclage de vapeur en communication fluide avec ledit évaporateur, un réfrigérant en communication fluide avec ledit courant de recyclage de vapeur et en communication fluide avec ledit courant d'alimentation de solvant liquide.

16. Système selon la revendication 14, dans lequel ladite biomasse comprend des algues sèches ou demi-sèches ayant une teneur en lipides allant d'environ 14 à environ 90% en poids sec.
